(19) Europäisches Patentamt
European Patent Office
Office européen des brevets

(11) **EP 1 683 140 B1**

(12) **EUROPEAN PATENT SPECIFICATION**

(45) Date of publication and mention
of the grant of the patent:
**15.10.2008 Bulletin 2008/42**

(51) Int Cl.:
***G11B 7/09*** *(2006.01)*     ***G11B 7/14*** *(2006.01)*

(21) Application number: **04769759.4**

(22) Date of filing: **29.10.2004**

(86) International application number:
**PCT/IB2004/003561**

(87) International publication number:
**WO 2005/043519 (12.05.2005 Gazette 2005/19)**

(54) **MULTI-BEAM OPTICAL SCANNING DEVICE**

OPTISCHE MEHRSTRAHL-SCANNING-EINRICHTUNG

DISPOSITIF OPTIQUE DE BALAYAGE A FAISCEAUX MULTIPLES

(84) Designated Contracting States:
**AT BE BG CH CY CZ DE DK EE ES FI FR GB GR HU IE IT LI LU MC NL PL PT RO SE SI SK TR**

(30) Priority: **30.10.2003 EP 03300187**

(43) Date of publication of application:
**26.07.2006 Bulletin 2006/30**

(73) Proprietor: **Koninklijke Philips Electronics N.V.
5621 BA Eindhoven (NL)**

(72) Inventors:
• **VAN DER LEE, Alexander, Marc
F-75008 Paris (FR)**

• **BUSCH, Christopher
F-75008 Paris (FR)**

(74) Representative: **van Oudheusden-Perset, Laure E. et al
Société Civile SPID
156, Boulevard Haussmann
75008 Paris (FR)**

(56) References cited:
**EP-A- 1 005 031**     **EP-A- 1 074 983**
**US-A- 5 854 780**

## Description

### FIELD OF THE INVENTION

The present invention relates to a multi-beam optical scanning device for writing on and/or reading out from an information carrier.

The present invention also relates to a method for writing on and/or reading out from an information carrier using such an optical scanning device.

The present invention is particularly relevant for multi-dimensional data storage on optical discs.

### BACKGROUND OF THE INVENTION

An optical disc is made of a transparent substrate in which data, in the form of a serial bitstream, are encoded as a series of marks in a reflective surface within the disc. The marks are arranged along a spiral track. Data are read from the optical disc by an optical scanning device, comprising a laser beam which is focused onto a track on the disc by focusing means and detecting means for detecting the light reflected from the surface of the disc. By rotating the optical disc, the light reflected from the surface of the disc is modulated by the pattern of the pits rotating into and out the field of laser illumination. The optical scanning device detects the modulated reflected laser light and produces an electrical signal that is decoded to recover the digital data stored on the optical disc. The optical scanning device comprises a pickup assembly that may be positioned and focused to read or write data on any disc track despite disk warpage or eccentricity.

To this end, the optical scanning device usually comprises a servo mechanism comprising focus error detecting means, which measure certain parameters of a light spot formed by the illumination beam reflected from the optical disc onto a detector, and an actuator for moving the focusing means in order to keep the optical disc in focus. The focus error detecting means use several conventional methods like for instance the astigmatic or the Foucault methods.

Multi-beam optical scanning devices are now being developed, which allow data retrieval of conventional discs and which additionally allow reading optical discs having multiple concentric spiral or circular tracks. Such multi-beam optical scanning devices cause difficulties for focus error detection and correction, because the multiple beams are very close to each other, which places severe constraints on the size of the detector. If the detector is too large, several spots impinge in the detector. The large diameter of the spots may also cause crosstalk between neigbouring beams. Additionally, when out of focus, the spots may extend beyond the detector or overlap with each other, thus making it difficult to obtain an accurate focus error signal.

EP 1 005 031 A2 discloses a multi-beam apparatus having a control unit for controlling the position of an objective lens for focusing the beams on an information carrier, and a focus error detection means.

US patent 6,229,771 discloses focus error detection means for use in a multi-beam optical scanning device. The disclosed focus error detection means, which implement the astigmatic method, comprise an optical element, either a holographic element or a diffractive grating, that generates a separate set of beams for use in determining the focus error. These beams are directed onto multi-element focus detectors configured to account for overlap between spots. The design of the focus detector, in conjunction with rotation of an axis for astigmatism and a spacing of the spots onto the detector by the optical elements permits generation of a focus error signal that compensates for the spot size exceeding the size of the detector and overlap between the spots.

A drawback of this solution is that it does not avoid a formation of overlapping spots onto the detector. Furthermore, it is not adapted to optical scanning devices with focus error detecting means implementing the Foucault method.

### SUMMARY OF THE INVENTION

The object of the invention is to propose a solution for avoiding interference and overlapping of a plurality of spots when processed by focus error detection means implementing the Foucault method.

This is achieved by an optical scanning device comprising:

- a radiation source for producing a radiation beam,
- means for dividing the radiation beam into a plurality of radiation sub-beams,
- focusing means for focusing the plurality of radiation sub-beams on an information carrier intended to reflect said plurality of radiation sub-beams towards a detection branch,
- focus error detection means, comprising on said detection branch, a servo lens for focusing said plurality of reflected radiation sub-beams onto a focus plane, a spatial filter for isolating a reflected radiation sub-beam from said plurality of reflected radiation sub-beams at the focus plane, splitting means for splitting one or more reflected radiation sub-beams into two halves and a detector for detecting a focus error signal from said isolated reflected radiation sub-beam.

At the focus plane, the plurality of reflected radiation sub-beams is expected to be focused or close to focus. The spatial filter in accordance with the invention is intended to block all the radiation sub-means but one. Therefore, only one radiation spot is detected by the detector, which is able to measure an accurate focus error signal. Consequently, with the invention, a valuable S-curve can be obtained from which an error signal giving the amount of defocus is derived.

Advantageously, the optical scanning device comprises decision means for deciding of a type of focus error correction depending of said detected focus error signal.

When the radiation spots are close to focus, the spatial filter is efficient at masking all the radiation sub-beams but one. However, when the reflected radiation sub-beams are too far away from focus, several reflected radiation sub-beams may interfere at the spatial filter plane, partly pass through the spatial filter and form overlapping radiation spots at the detector. In this case, the detector detects several overlapping radiation spots. The obtained focus error signal therefore comprises contributions from several radiation spots and cannot lead to a valuable S-curve.

The decision means in accordance with the invention determine a capture range, within which the detected focus error signal contributes to a valuable S-curve. When the detected focus error signal is within the capture range, a position error is calculated from the S-curve and used for correcting a position of the focusing means. A closed loop correction is achieved. On the contrary, when the detected focus error signal goes out of this capture range, no position error is calculated from the S-curve and the focusing means position is changed by a predetermined displacement unit. An open loop correction is achieved until the detected focus error signal goes within the capture range.

An advantage of the invention is to adapt the type of correction to the amount of defocus.

In a first embodiment of the invention, the spatial filter comprises a slit. The slit, which blocks the light in one dimension, is well adapted to a one dimensional array of spots. An advantage of a slit is that the alignment along one axis is non-critical.

In a second embodiment of the invention, the spatial filter comprises a hole. A hole, which blocks the light in two dimensions, is well adapted to the use of a two-dimensional array of read-out spots.

These and other aspects of the invention will be apparent from and will be elucidated with reference to the embodiments described hereinafter.

## BRIEF DESCRIPTION OF THE DRAWINGS

The present invention will now be described in more detail, by way of example, with reference to the accompanying drawings, wherein:

- Fig. 1a is a schematical drawing of an optical disc comprising multiple concentric spiral data tracks,
- Fig. 1b is a schematical drawing of the layout of the data on a 2D track,
- Fig. 2 is a schematical drawing showing the light path in the optical scanning device for multiple beam reading,
- Figs. 3a, 3b and 3c illustrate the principles of the knife edge Foucault method,
- Fig. 4a shows an S-curve obtained from the focus error signal,
- Figs. 4b and 4c illustrate the light path in the detection branch in accordance with the invention, with two possible positions of the focus plane,
- Fig. 5 is a schematical drawing showing the light path in an optical scanning device in accordance with the invention,
- Figs. 6a and 6b show a schematical drawing of the detector in accordance with an embodiment of the invention,
- Figs. 7a and 7b show S-curves obtained without and with the invention.

## DETAILED DESCRIPTION OF THE INVENTION

In the following, the invention will be described for an optical disc allowing a two-dimensional data storage. It should be noted however that the invention more generally concerns applications using closely spaced, but distinct focused beams, for which a focus error signal has to be derived. This can be multi-beam access to optical storage information carriers, such as conventional formats like Compact Discs (CD), Digital Versatile Disks (DVD), Blu-ray discs (BD), two-dimensional or higher dimensional formats. This can also concern surface patterning applications outside of data storage, such as optical writing on a surface, surface cleaning, optical tweezer concepts.

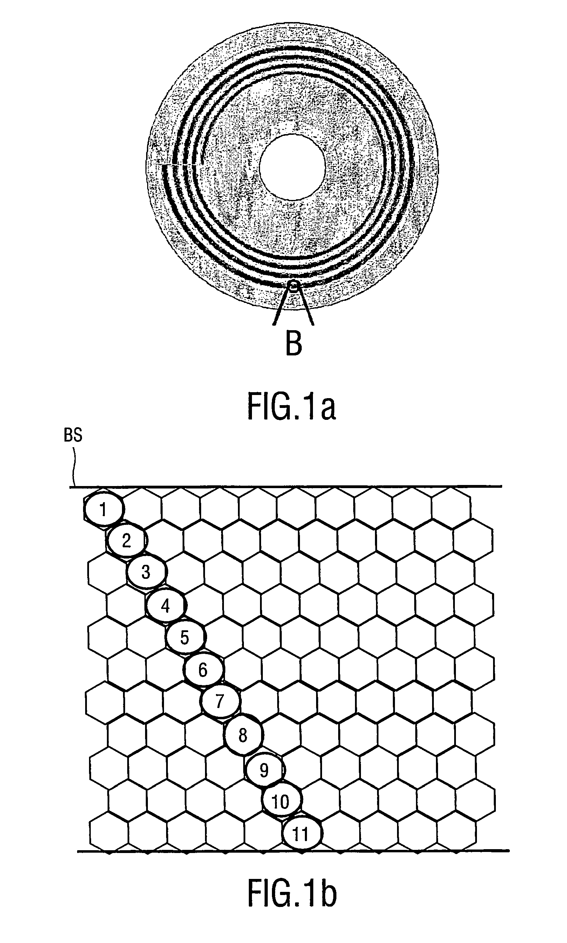

Fig. 1a is a schematical drawing of an optical disc comprising multiple concentric spiral tracks forming a broad spiral track BS. As shown in Fig. 1b, the broad spiral track BS has a 2D storage capacity with a plurality of contiguous linear data tracks. The broad spiral track is read by an optical scanning device, which divides a radiation beam into as many sub-beams as there are linear data tracks in the broad spiral BS.

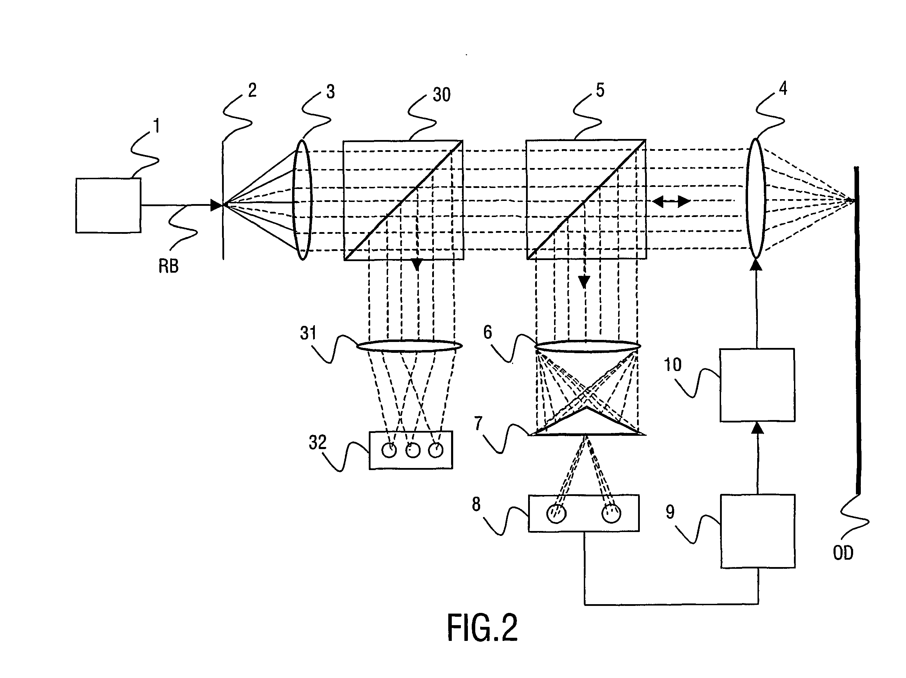

Fig. 2 describes in a schematical way an optical scanning device for reading the optical disc of Fig. 1a. The optical scanning device comprises a radiation source 1 for producing a radiation beam RB, a grating 2 for dividing the radiation beam RB into a plurality of radiation sub-beams $RSB_1$ to $RSB_N$, where N is an integer, focusing means for focusing the radiation sub-beams $RSB_1$ to $RSB_N$ on the optical disc OD along an optical path. The focusing means in particular comprise a collimator lens 3 and an objective lens 4. The radiation sub-beams $RSB_1$ to $RSB_N$ are reflected by the optical disc OD and redirected towards a focus detection branch by a beam splitter 5. Said focus detection branch comprises focus error detection means, which implement the Foucault method of detecting a focus error signal. The focus error detection means comprise a servo lens 6 for focusing the reflected radiation sub-beams onto a focus plane FP, splitting means 7 for splitting the reflected radiation sub-beams into two halves and a split detector 8 for detecting spots formed by the two halves of the reflected radiation sub-beams. The split detector calculates a focus error signal FES from the detected light spots and draws an S-curve of the focus error signal as a function of a displacement of the objective lens 4. The optical scanning device further comprises correction means 9, which comprise servo electronics for driving an actuator 10, said actuator actuating the objective lens 4 so as to correct a focus error. The focus error detection means and the correction means usually form a closed servo loop, in which the position of the objective lens 4 is changed in order to make the focus error signal value as close as possible to zero.

The optical scanning device further comprises a high frequency detection branch for retrieving the data read on the optical disc OD. The reflected sub-beams $RSB_1$ to $RSB_N$ are redirected onto the high frequency detection branch by a beam splitter 30 and focussed by a second servo lens 31 onto a high-frequency detector 32, where they form read-out spots. The high-frequency detector measures the read-out spots separately.

It should be noted that this detection branch is usually integrated with the focus detection branch by using a grating or an holographic element similar to the splitting means 7.

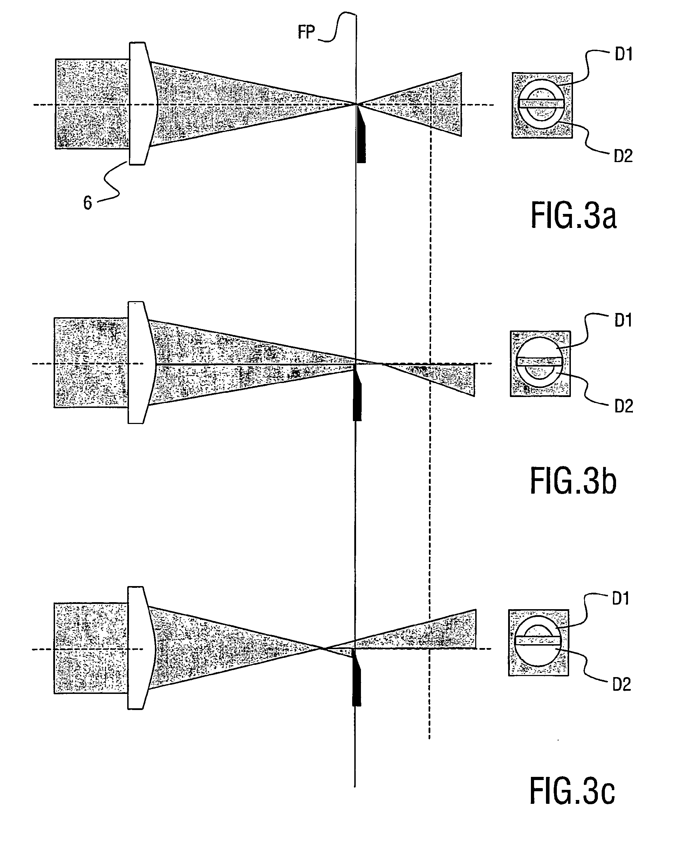

Figs 3a to 3c illustrate the principles of the Foucault method. The splitting means 7 are for instance a knife edge, but they can be a wedge, a split grating or a split hologram as well. The Foucault method is based on the principle that a longitudinal shift of the focus point gives rise to a displacement of the radiation beam center of mass at the split detector 8. The servo lens 6 images the focal point of the radiation beam at the splitting means 7. When the disc is not in focus the distance traveled by the radiation beam of the radiation source is longer and the focal point of the beam is either before or after the splitting means 7. Fig. 3a shows a radiation beam which is in focus, Fig. 3b a radiation beam, which focuses after the focus plane and Fig. 3c a radiation beam which focuses before the focus plane.

As shown in Fig. 3a, when the radiation beam is focused, two symmetrical halves of a spot are formed on detection areas $D_1$ and $D_2$ of the split detector 8. As shown in Figs. 1b and 1c, when the radiation beam is defocused, the halves of the spot are no more symmetrical.

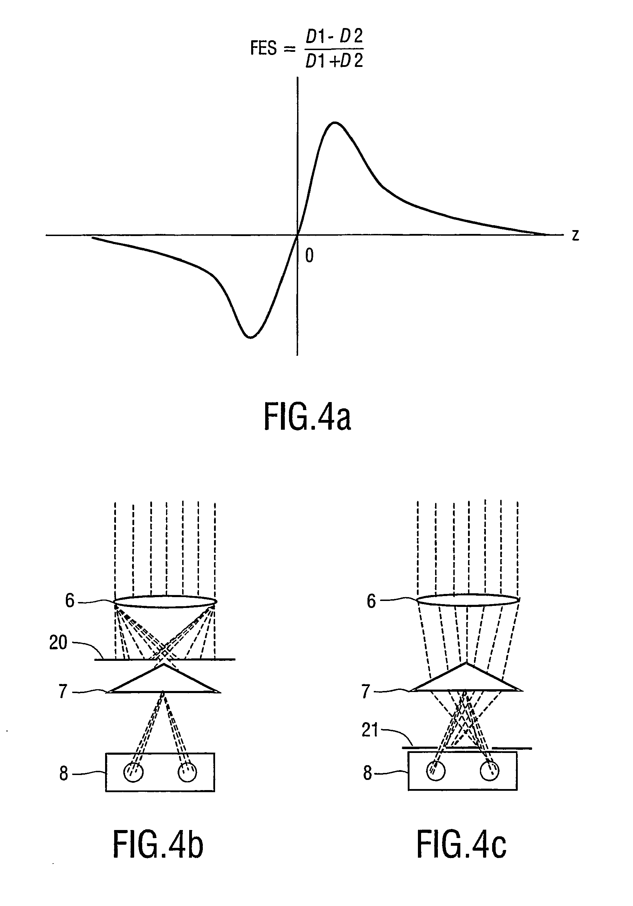

Fig. 4a presents an S-curve obtained from the spots formed on the split detector. A signal $S_1$ and a signal $S_2$ received on the detection areas $D_1$ and $D_2$ of the split detector are measured. They contribute to the focus error signal FES in the following way:

$$FES = \frac{S1 - S2}{S1 + S2}$$

The focus error signal obtained is used to draw a S-curve, as a function of a displacement z of the objective lens 3.

The zero point of the S-curve corresponds to the in-focus position.

Figs. 4b and 4c present focus error detection means in accordance with the invention. Said focus error detection means comprise a spatial filter 20, which is placed at the focus plane FP in order to filter the radiation sub-beams and only let pass one radiation sub-beam.

Advantageously, the spatial filter has a diameter which is equal to the separation of the spots at the focus of the servo lens. In this way, the spatial filter is just large enough to transmit one spot and is just small enough to block the other spots in order to have maximal S-curve length.

The Foucault method can be implemented in two ways: the servo lens 6 can focus the reflected radiation sub-beams either onto the splitting means as shown in Fig. 4b, or onto the split detector as shown by Fig. 4c. In the first case, the spatial filter 20 in accordance with the invention is placed just before the splitting means. In this case, it should be noted that the spatial filter could be implemented by manufacturing the part of the wedge corresponding to the transmissive area of the spatial filter with a transmissive material and to embed this part into a non-transmissive holder. An advantage of such an alternative is to get rid of any problem of placement of the spatial filter with respect to the wedge.

In the second case, the spatial filter 21 in accordance with the invention is placed just before the split detector. The spatial filter function can also be integrated into the detector by limiting the size of the detection element accordingly.

Advantageously, the spatial filter 20 has a diameter which is equal to the separation of the radiation sub-beams at the focus of the servo lens. For the optical disc presented in Figs. 1a and 1b, the separation of the radiation sub-beams is equal to 2.8 $\lambda$/NA, where $\lambda$ stands for a wavelength and NA for a numerical aperture of the radiation sub-beams.

In this way, the spatial filter is just large enough to transmit one radiation sub-beam and is just small enough to block the other radiation sub-beams. Therefore, at the split detector 8, only one spot is formed, which allows calculating an accurate focus error signal and drawing an S-curve with maximal S-curve length. It is to be noted that the S-curve length corresponds to a range of positions of the objective lens 4, for which the read-out spots are out-of-focus but still yield a correct position error signal.

In a first embodiment of the invention, the spatial filter comprises a slit. The slit, which blocks the light in one dimension, is well adapted to a one dimensional array of spots. An advantage of a slit is that its alignment is noncritical in one dimension.

In a second embodiment of the invention, the spatial filter comprises a hole. A hole, which blocks the light in two dimensions, is well adapted to two-dimensional array of spots.

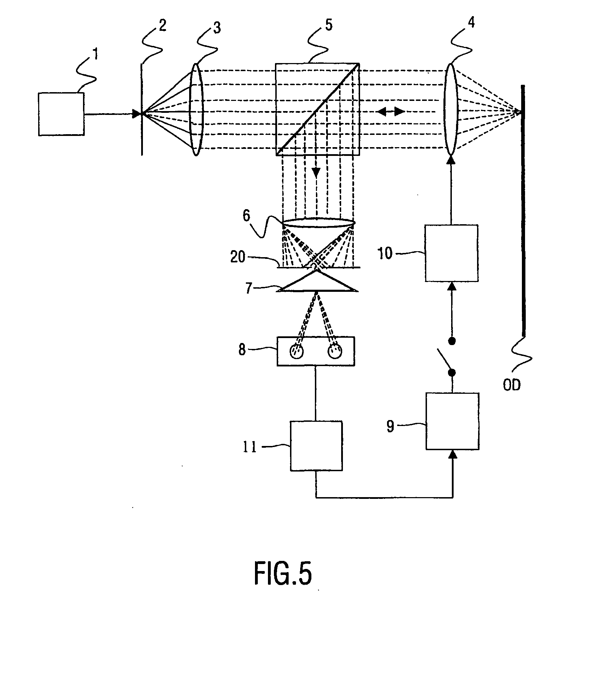

Advantageously, as shown in Fig. 5, the focus error detection means in accordance with the invention further comprise decision means 11 for deciding of a type of focus error correction depending of said detected focus error signal. As a matter of fact, when the radiation sub-beams are close to focus, the spatial filter is efficient at masking all the reflected radiation sub-beams but one. Therefore, the S-curve is reliable and can be validly used for driving the lens actuator 10. However, when the radiation sub-beams are too far away from focus, several radiation sub-beams may interfere at the spatial filter plane, partly pass through the spatial filter and form overlapping radiation spots at the split detector 8. In this case, the split detector 8 detects several overlapping radiation spots. The obtained focus error signal therefore comprises contributions from several radiation spots and cannot lead to a valuable S-curve. To prevent the closed servo loop from correcting the objective lens position on a wrong basis, the decision means in accordance with the invention decide when the focus error signal FES can be validly used for correcting the objective lens position. To this end, the decision means 11 advantageously calculate a central aperture (CA) signal from the signals $S_1$ and $S_2$ measured on the detection areas $D_1$ and $D_2$ respectively, in the following way: CA = S 1 + S2. The decision means then decide to use the focus error signal FES to correct the objective lens position if the CA signal is included into a capture range.

Advantageously, the decision means 11 decide that the focus error signal FES can be validly used if the CA signal is higher than a first predetermined threshold. As a matter of fact, strongly defocused radiation sub-beams form overlapping spots on the two halves of the split detector, which lead to a far lower CA signal than when the radiation sub-beams are close to focus.

It should be noted that the threshold value depends on the application.

When the CA signal is below the first predetermined threshold, the decision means 11 decide that the objective lens position cannot be efficiently corrected on the basis of the S-curve and an open loop correction is achieved: for instance, the actuator 10 moves the objective lens 3 of a predetermined step. A new measure of the CA signal is performed by the focus error detection means. If the CA signal increases, this means that the displacement has been applied in the right direction. The operation is repeated until the decision means can decide to re activate the closed servo loop, that is when the CA signal is within the capture range.

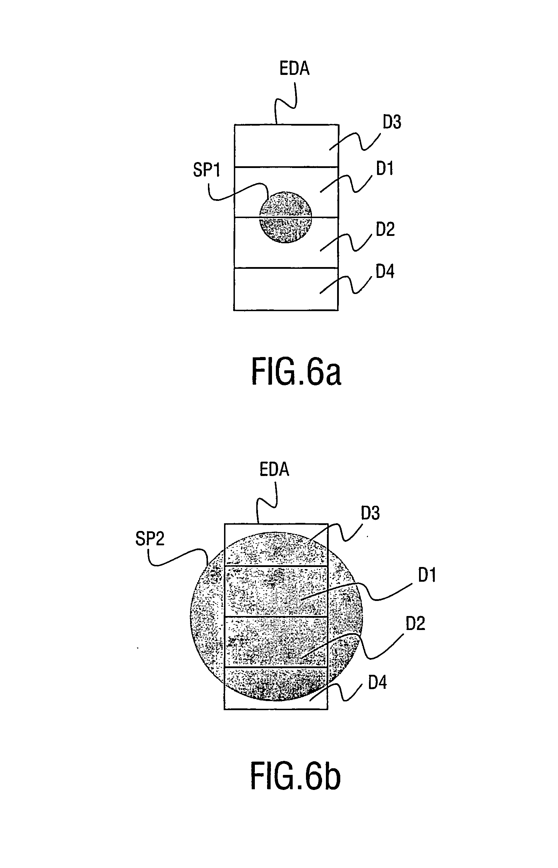

In an alternative of the invention presented in Figs. 6a and 6b, the split detector 8 comprises two additional detection halves $D_3$ and $D_4$, forming with the two detection halves $D_1$ and $D_2$ an extended detection area EDA for detecting an intensity of a spot extending beyond the detection areas $D_1$ and $D_2$. Fig. 6a shows a spot which is included within the two halves $D_1$ and $D_2$ of the detector. On the contrary, Fig. 6b shows a spot whose diameter is larger than the two halves $D_1$ and $D_2$ and which covers the two additional halves $D_3$ and $D_4$. With said alternative of the invention, a first measure of a first CA signal is performed in the two halves $D_1$ and $D_2$ and a second measure of a second CA signal is performed in the additional halves $D_3$ and $D_4$. A focus error signal is derived from the first measure. A normalised CA signal CAN is calculated as a ratio of the signals measured on the two halves $D_1$ and $D_2$ and on the two additional halves $D_3$ and $D_4$ in the following way:

$$CA_N = \frac{S_1 + S_2}{S_3 + S_4}$$

The decision means decide to use the focus error signal for correcting the objective lens position if said normalised CA signal CAN is higher than a second predetermined threshold. An advantage of said alternative is to measure how far the spot formed by the isolated reflected sub-beam goes beyond the detection areas $D_1$ and $D_2$ of the detector 8. This measure is taken into account in the decision. Therefore, with said alternative of the invention, the focus error signal is exploited for not too large spots with a high enough intensity.

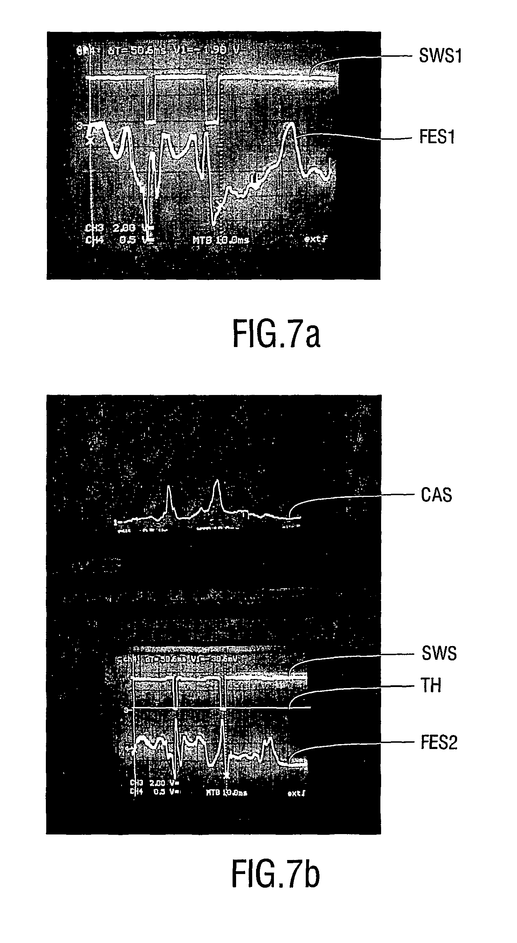

Fig. 7a shows an experimental focus error signal $FES_1$ and a square wave signal $SWS_1$ obtained from an optical scanning device comprising a plurality of radiation sub-beams for reading out a 2D concentric spiral track as shown in Fig. 1b. The square wave signal $SWS_1$ is derived from the CA signal of the split detector. Multiple S-curves are visible and there is a large offset, so that the S-curves do not cross the zero voltage line.

Fig. 7b shows a CA signal CAS, a square wave signal $SWS_2$ and an experimental focus error signal $FES_2$ obtained from an optical scanning device comprising a plurality of radiation sub-beams for reading out a 2D concentric spiral track in accordance with the invention. The square wave signal $SWS_2$ is derived from the CA signal CAS of the split detector and indicates the threshold TH used. When the CA signal is above the threshold, the focus error signal $FES_2$ shows a pronounced focus S-curve

The drawings and their description hereinbefore illustrate rather than limit the invention. It will be evident that there are numerous alternatives, which fall within the scope of the appended claims. In this respect the following closing remarks are made: there are numerous ways of implementing functions by means of items of hardware or software, or both. In this respect, the drawings are very diagrammatic, each representing only one possible embodiment of the invention. Thus, although a drawing shows different functions as different blocks, this by no means excludes that a single item of hardware or software carries out several functions, nor does it exclude that a single function is carried out by an assembly of items of hardware or software, or both.

Any reference sign in a claim should not be construed as limiting the claim. Use of the verb "to comprise" and its conjugations does not exclude the presence of elements or steps other than those stated in a claim. Use of the article "a" or "an" preceding an element or step does not exclude the presence of a plurality of such elements or steps.

**Claims**

1. An optical scanning device comprising:

   - a radiation source (1) for producing a radiation beam,
   - means (2) for dividing the radiation beam into a plurality of radiation sub-beams,
   - focusing means (4) for focusing the plurality of radiation sub-beams on an information carrier (OD) intended to reflect said plurality of radiation sub-beams towards a focus detection branch,
   - focus error detection means, comprising on said focus detection branch, a servo lens (6) for focusing said plurality of reflected radiation sub-beams onto a focus plane, a spatial filter (20, 21) for isolating a reflected radiation sub-beam from said plurality of reflected radiation sub-beams at the focus plane, splitting means (7) for splitting one or several reflected radiation sub-beams into two halves and a detector (8) for detecting a focus error signal from said isolated reflected radiation sub-beam.

2. An optical scanning device as claimed in claim 1, comprising focus error correction means (9) and decision means (11) for deciding of a type of focus error correction depending of said detected focus error signal.

3. An optical scanning device as claimed in claim 2, wherein said decision means (11) calculate a central aperture signal and decide to use the focus error signal for correcting a position of said focusing means if said central aperture signal is higher than a first predetermined threshold.

4. An optical scanning device as claimed in claim 2, wherein said detector (8) comprises an extended detection area for calculating a normalised central aperture signal and said decision means (11) decide to use the focus error signal for correcting a position of said focusing means if said normalised central aperture signal is higher than a second predetermined threshold.

5. An optical scanning device as claimed in claims 3 or 4, wherein, when said decision means (11) decide not to use said focus error signal, the position of said focusing means is corrected of a predetermined unit step.

6. An optical scanning device as claimed in claim 1, wherein said spatial filter (20,21) has a diameter, which is equal to a separation of the spots at said focus plane.

7. An optical scanning device as claimed in claim 1, wherein said spatial filter (20,21) comprises a slit.

8. An optical scanning device as claimed in claim 1, wherein said spatial filter (20, 21) comprises a hole.

9. An optical scanning device as claimed in claim 1, wherein the spatial filter (20,21) is obtained by limiting a transmissive area of a wedge.

10. A method of reading out an information carrier, comprising the steps of:

    - producing a radiation beam,
    - dividing the radiation beam into a plurality of radiation sub-beams,
    - focusing the plurality of radiation sub-beams on an information carrier intended to reflect said plurality of radiation sub-beams towards a focus detection branch,
    - detecting on said focus detection branch a focus error from said reflected radiation sub-beams, comprising the sub-steps of:

      - using a servo lens (6) for focusing the reflected radiation sub-beams onto a focus plane,
      - spatially filtering said reflected radiation sub-beams,
      - splitting one or several radiation sub-beams into two halves,
      - measuring a focus error signal by spots formed by said filtered radiation sub-beams on a split detector (8).

11. A method of reading out an information carrier as claimed in claim 10, wherein the step of spatially filtering is performed before the step of splitting.

12. A method of reading out an information carrier as claimed in claim 10, wherein the step of splitting is performed before the step of spatially filtering.

13. A method of reading out an information carrier as claimed in claim 10, comprising a step of correcting a focus of said radiation sub-beams onto said information carrier, wherein the focus error detection step further comprises a decision sub-step for deciding of a type of focus error correction depending on said focus error signal.

14. A method of reading out an information carrier as claimed in claim 13, wherein said decision sub-step measures a central aperture signal from said spots and decides to use said focus error signal if said central aperture signal is higher than a first predetermined threshold.

**Patentansprüche**

1.  Optische Abtastanordnung, die Folgendes umfasst:

    - eine Strahlungsquelle (1) zum Erzeugen eines Strahlungsbündels,
    - Mittel (2) zum Aufteilen des Strahlungsbündels in eine Anzahl Strahlungsteilbündel,
    - Fokussierungsmittel (4) zum Fokussieren der vielen Strahlungsteilbündel auf einen Aufzeichnungsträger (OD) zum Reflektieren der vielen Strahlungsteilbündel in Richtung eines Fokusdetektionszweiges,
    - Fokusfehlerdetektionsmittel, die in dem genannten Fokusdetektionszweig eine Servolinse (6) zur Fokussierung der genannten vielen oder reflektierten Strahlungsteilbündel auf eine Fokusebene, ein räumliches Filter (20, 21) zum Isolieren eines reflektierten Strahlungsteilbündels aus den genannten vielen reflektierten Strahlungsteilbündel auf der Fokusebene, Spaltmittel (7) zum Aufspalten eines einzigen oder verschiedener reflektierter Strahlungsteilbündel in zwei Hälften, und einen Detektor (8) zum Detektieren eines Fokusfehlersignals aus dem genannten isolierten reflektierten Strahlungsteilbündel.

2.  Optische Abtastanordnung nach Anspruch 1, mit Fokusfehlerkorrekturmitteln (9) und Entscheidungsmitteln (11) zum Entscheiden für einen Fokusfehlerkorrekturtyp, und zwar je nach dem genannten detektierten Fokusfehlersignal.

3.  Optische Abtastanordnung nach Anspruch 2, wobei die genannten Entscheidungsmittel (11) ein zentrales Apertursignal berechnen und entscheiden, das Fokusfehlersignal zum Korrigieren einer Position der genannten Fokussierungsmittel zu verwenden, wenn das zentrale Apertursignal höher ist als eine erste vorbestimmte Schwelle.

4.  Optische Abtastanordnung nach Anspruch 2, wobei der genannte Detektor (8) ein erweitertes Detektionsgebiet zum Berechnen eines normalisierten zentralen Apertursignals aufweist, und die genannten Entscheidungsmittel (11) entscheiden, das Fokusfehlersignal zum Korrigieren einer Position der genannten Fokussierungsmittel zu verwenden, wenn das normalisierte zentrale Apertursignal höher ist als eine zweite vorbestimmte Schwelle.

5.  Optische Abtastanordnung nach Anspruch 3 oder 4, wobei, wenn die genannten Entscheidungsmittel (11) entscheiden, das Fokusfehlersignal nicht zu verwenden, die Position der genannten Fokussierungsmittel um einen vorbestimmten Einheitsschritt korrigiert wird.

6.  Optische Abtastanordnung nach Anspruch 1, wobei das genannte räumliche Filter (20, 21) einen Durchmesser hat, der einer Trennung der Punkte auf der genannten Fokusebene entspricht.

7.  Optische Abtastanordnung nach Anspruch 1, wobei das genannte räumliche Filter (20, 21) einen Schlitz aufweist.

8.  Optische Abtastanordnung nach Anspruch 1, wobei das genannte räumliche Filter (20, 21) ein Loch aufweist.

9.  Optische Abtastanordnung nach Anspruch 1, wobei das räumliche Filter (20, 21) durch Begrenzung eines transmissiven Gebietes eines Keils erhalten wird.

10. Verfahren zum Auslesen eines Informationsträgers, wobei das Verfahren die nachfolgenden Verfahrensschritte umfasst:

    - das Erzeugen eines Strahlungsbündels,
    - das Aufteilen des Strahlungsbündels in eine Anzahl Strahlungsteilbündel,
    - das Fokussieren der vielen Strahlungsteilbündel auf einem Informationsträger zum Reflektieren der genannten vielen Strahlungsteilbündel in Richtung eines Fokusdetektionszweiges,
    - das Detektieren eines Fokusfehlers in dem genannten Fokusdetektionszweig von den genannten reflektierten Strahlungsteilbündeln, wobei diese Detektion die nachfolgenden Teilschritte umfasst:

        -- das Verwenden einer Servolinse (6) zum Fokussieren der reflektierten Strahlungsteilbündel auf eine Fokusebene,
        -- das räumliche Filtern der genannten reflektierten Strahlungsteilbündel,
        -- das Aufspalten eines oder verschiedener Strahlungsteilbündel in zwei Hälften,
        -- das Messen eines Fokusfehlersignals durch Punkte, die durch die genannten gefilterten Strahlungsteilbündel an einem Spaltdetektor (8) gebildet sind.

11. Verfahren zum Auslesen eines Informationsträgers nach Anspruch 10, wobei der Schritt der räumlichen Filterung vor dem Schritt der Aufspaltung durchgeführt wird.

**12.** Verfahren zum Auslesen eines Informationsträgers nach Anspruch 10, wobei der Schritt der Aufspaltung vor dem Schritt der räumlichen Filterung durchgeführt wird.

**13.** Verfahren zum Auslesen eines Informationsträgers nach Anspruch 10, wobei das Verfahren einen Korrekturschritt zum Korrigieren eines Brennpunktes der genannten Strahlungsteilbündel auf den genannten Informationsträger aufweist, wobei der Fokusfehlerdetektionsschritt weiterhin einen Entscheidungshilfsschritt umfasst zum Entscheiden eines Fokusfehlerkorrekturtyps, und zwar abhängig von dem genannten Fokusfehlersignal.

**14.** Verfahren zum Auslesen eines Informationsträgers nach Anspruch 13, wobei der genannte Entscheidungshilfsschritt ein zentrales Apertursignal von den genannten Punkten misst und entscheidet, das genannte Fokusfehlersignal zu verwenden, wenn das genannte zentrale Apertursignal höher ist als eine erste vorbestimmte Schwelle.

**Revendications**

**1.** Dispositif de balayage optique comprenant:

- une source de rayonnement (1) pour produire un faisceau de rayonnement,
- des moyens (2) pour diviser le faisceau de rayonnement en une pluralité de sous-faisceaux de rayonnement,
- des moyens de focalisation (4) pour focaliser la pluralité de sous-faisceaux de rayonnement sur un support d'information (OD) qui est destiné à réfléchir ladite pluralité de sous-faisceaux de rayonnement vers une branche de détection de focalisation,
- des moyens de détection d'erreur de focalisation comprenant sur ladite branche de détection de focalisation un objectif d'asservissement (6) pour focaliser ladite pluralité de sous-faisceaux de rayonnement réfléchis sur un plan de focalisation, un filtre spatial (20, 21) pour isoler un sous-faisceau de rayonnement réfléchi de ladite pluralité de sous-faisceaux de rayonnement réfléchis à l'endroit du plan de focalisation, des moyens de division (7) pour diviser un ou plusieurs sous-faisceaux de rayonnement réfléchis en deux moitiés et un détecteur (8) pour détecter un signal d'erreur de focalisation à partir dudit sous-faisceau de rayonnement réfléchi isolé.

**2.** Dispositif de balayage optique selon la revendication 1, comprenant des moyens de correction d'erreur de focalisation (9) et des moyens de décision (11) pour décider d'un type de correction d'erreur de focalisation en fonction dudit signal d'erreur de focalisation détecté.

**3.** Dispositif de balayage optique selon la revendication 2, dans lequel lesdits moyens de décision (11) calculent un signal d'ouverture centrale et décident d'utiliser le signal d'erreur de focalisation pour corriger une position desdits moyens de focalisation si ledit signal d'ouverture centrale est supérieur à un premier seuil prédéterminé.

**4.** Dispositif de balayage optique selon la revendication 2, dans lequel ledit détecteur (8) comprend une zone de détection étendue pour calculer un signal normalisé d'ouverture centrale et dans lequel lesdits moyens de décision (11) décident d'utiliser le signal d'erreur de focalisation pour corriger une position desdits moyens de focalisation si ledit signal normalisé d'ouverture centrale est supérieur à un deuxième seuil prédéterminé.

**5.** Dispositif de balayage optique selon la revendication 3 ou 4, dans lequel, lorsque lesdits moyens de décision décident de ne pas utiliser ledit signal d'erreur de focalisation, la position desdits moyens de focalisation est corrigée d'une étape prédéterminée d'unité.

**6.** Dispositif de balayage optique selon la revendication 1, dans lequel ledit filtre spatial (20, 21) présente un diamètre qui est égal à une séparation des spots à l'endroit dudit plan de focalisation.

**7.** Dispositif de balayage optique selon la revendication 1, dans lequel ledit filtre spatial (20, 21) comprend une fente.

**8.** Dispositif de balayage optique selon la revendication 1, dans lequel ledit filtre spatial (20, 21) comprend un trou.

**9.** Dispositif de balayage optique selon la revendication 1, dans lequel on obtient le filtre spatial (20, 21) en limitant une zone de transmission d'un coin.

**10.** Procédé de lecture d'un support d'information, comprenant les étapes suivantes consistant à:

- produire un faisceau de rayonnement,
- diviser le faisceau de rayonnement en une pluralité de sous-faisceaux de rayonnement,
- focaliser la pluralité de sous-faisceaux de rayonnement sur un support d'information qui est destiné à réfléchir ladite pluralité de sous-faisceaux de rayonnement vers une branche de détection de focalisation,
- détecter sur ladite branche de détection de focalisation une erreur de focalisation à partir des-

**EP 1 683 140 B1**

dits sous-faisceaux de rayonnement réfléchis, comprenant les étapes suivantes consistant à:

- utiliser un objectif d'asservissement (6) pour focaliser les sous-faisceaux de rayonnement réfléchis sur un plan de focalisation,
- filtrer de façon spatiale lesdits sous-faisceaux de rayonnement réfléchis,
- diviser un ou plusieurs sous-faisceaux de rayonnement en deux moitiés,
- mesurer un signal d'erreur de focalisation par des spots qui sont formés par lesdits sous-faisceaux de rayonnement filtrés sur un détecteur de division (8).

11. Procédé de lecture d'un support d'information selon la revendication 10, dans lequel l'étape de filtrage spatial est exécutée avant l'étape de division.

12. Procédé de lecture d'un support d'information selon la revendication 10, dans lequel l'étape de division est exécutée avant l'étape de filtrage spatial.

13. Procédé de lecture d'un support d'information selon la revendication 10, comprenant une étape suivante consistant à corriger une focalisation desdits sous-faisceaux de rayonnement sur ledit support d'information, dans lequel l'étape de détection d'erreur de focalisation comprend encore une sous-étape de décision pour décider d'un type de correction d'erreur de focalisation en fonction dudit signal d'erreur de focalisation.

14. Procédé de lecture d'un support d'information selon la revendication 13, dans lequel ladite sous-étape de décision mesure un signal d'ouverture centrale à partir desdits spots et décide d'utiliser ledit signal d'erreur de focalisation si ledit signal d'ouverture centrale est supérieur à un premier seuil prédéterminé.

FIG.1a

FIG.1b

FIG.2

FP

D1

D2

6

FIG.3a

D1

D2

FIG.3b

D1

D2

FIG.3c

$$FES = \frac{D1 - D2}{D1 + D2}$$

FIG.4a

FIG.4b          FIG.4c

FIG.5

FIG.6a

FIG.6b

FIG.7a

FIG.7b

**EP 1 683 140 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1005031 A2

- US 6229771 B